Europäisches Patentamt

European Patent Office

Office européen des brevets

(19)

(11) Veröffentlichungsnummer: **0 252 090**
**B1**

(12) **EUROPÄISCHE PATENTSCHRIFT**

(45) Veröffentlichungstag der Patentschrift: **18.07.90**

(21) Anmeldenummer: **86906746.2**

(22) Anmeldetag: **24.11.86**

(86) Internationale Anmeldenummer:
**PCT/CH86/00161**

(87) Internationale Veröffentlichungsnummer:
**WO 87/03237 04.06.87 Gazette 87/12**

(51) Int. Cl.⁵: **B 24 B 5/14, B 24 B 49/00,**
**G 05 B 19/18**

(54) **VERFAHREN ZUM NULLSTELLEN EINER RUND-SCHLEIFMASCHINE UND MITTEL ZUR DURCHFÜHRUNG DES VERFAHRENS.**

(30) Priorität: **25.11.85 CH 5042/85**

(43) Veröffentlichungstag der Anmeldung:
**13.01.88 Patentblatt 88/02**

(45) Bekanntmachung des Hinweises auf die
Patenterteilung:
**18.07.90 Patentblatt 90/29**

(84) Benannte Vertragsstaaten:
**AT BE CH DE FR GB IT LI LU NL SE**

(56) Entgegenhaltungen:
**EP-A-0 131 366      FR-A-2 044 392**
**CH-A- 452 384      GB-A-1 367 091**
**CH-A- 639 025      US-A-3 664 066**
**DE-A-1 502 422      US-A-41 159 56**

**Patents Abstracts of Japan, Band 7, Nr. 179**
**(M-234) (1324) 9. August 1983, & JP, A, 5882656**
**(SHIGIYA SEIKI SEISAKUSHO K.K.) 18. Mai 1983,**
**siehe das ganze Dokument**

(73) Patentinhaber: **WERKZEUGMASCHINENFABRIK**
**TSCHUDIN**
**Maienstrasse 11**
**CH-2450 Grenchen (CH)**

(72) Erfinder: **WÄLTI, Werner**
**Passionstrasse 7**
**CH-2545 Selzach (CH)**

(74) Vertreter: **Gasser, François W.**
**Postfach 1555**
**CH-3001 Bern (CH)**

**Beschreibung**

Die vorliegende Erfindung betrifft einerseits ein Verfahren gemäss dem Oberbegriff des Patentanspruchs 1. Andererseits betrifft sie ein Mittel zur Durchführung dieses Verfahrens gemäss dem Oberbegriff des Patentanspruchs 6.

CNC-Rund-Schleifmaschinen werden immer häufiger eingesetzt, da sie wirtschaftlich und relativ einfach programmierbar sind, sodass das Umstellen der Maschine für das Schleifen unterschiedlicher Teile gegenüber herkömmlichen Rund-Schleifmaschinen wesentlich vereinfacht und beschleunigt wird. Zudem gestatten sie die Erreichung höchster Präzision und grösster Uebereinstimmung der einzelnen Stücke einer Serie, resp. sogar verschiedener Serien.

Das Schleifen von Werkstücken mit zylindrischem und konischem Teil ist aber selbst mit Maschinen dieses Typs sehr mühsam und langwierig, ist es doch äusserst schwierig, die Längsachse des zu schleifenden Stückes, oder die sogenannte C-Achse, genau parallel zur Schleiflinie, resp. der Längsachse des Längsschlittens, der sogenannten Z-Achse, einzustellen, um zylindrische Teile zu schleifen.

Teilweise ist diese Schwierigkeit durch eine Vorrichtung gemäss der CH-A-623 261 der Anmelderin gelöst worden, wobei diese Lösung allerdings nicht ermöglicht, die genaue Position der Längsachse des Drehtisches bezüglich der Längsachse des Längsschlittens zu ermitteln. Daher kann die Lage der Schleifstücklängsachse für eine rechnerische Weiterbehandlung bei dieser Lösung nicht herangezogen werden.

Mit den bekannten CNC-Rund-Schleifmaschinen ist es auch unmöglich kompliziert zu berechnen, wie die besagte C-Achse bezüglich der senkrecht zur Schleiflinie und dem Längsschlitten stehenden B-Achse verdreht und die Schleifscheibe oder der Längsschlitten verschoben werden müssen, um an den zylindrischen Teil des Werkstückes an vorbestimmter Stelle einen Konus anzuschleifen. Dazu fehlt es den Rechnern an den notwendigen Bezugsgrössen und teilweise an Mess- und Einstellvorrichtungen.

Der vorliegenden Erfindung liegt die Aufgabe zugrunde, sowohl verfahrens- als auch konstruktionsmässig Lösungen für diese Problematik vorzuschlagen. Zudem soll die Erfindung weitere Vereinfachungen in der Bedienung von Rund-Schleifmaschinen, speziell von CNC-gesteuerten Rund-Schleifmaschinen, bringen und das automatische Schleifen von kombinierten zylindrischen und konischen Werkstücken ermöglichen.

Erfindungsgemäss wird diese Aufgabe einerseits durch ein Verfahren wie es im Patentanspruch 1 definiert ist, gelöst.

Andererseits durch ein Mittel, wie es im Patentanspruch 6 umschrieben ist.

Im Folgenden wird anhand der Zeichnung das erfindungsgemässe Verfahren und ein vorteilhaftes erfindungsgemässes Mittel zu seiner Durchführung beschrieben, wobei von einer CNC-Rund-Schleifmaschine ausgegangen wird. In der Zeichnung zeigt

Fig. 1 schematisch die relevanten Teile und Achsen einer herkömmlichen Rund-Schleifmaschine von oben,

Fig. 2 ein darauf zu schleifendes Werkstück mit zylindrischem und konischem Teil,

Fig. 3 schematisch die relevanten Teile und Achsen einer Rund-Schleifmaschine, die mit dem erfindungsgemässen Mittel versehen ist und das Werkstück nach Fig. 2 problemlos schleift, von oben, und

Fig. 4 eine vorteilhafte Ausführungsform des erfindungsgemässen Mittels, ohne konstruktive Details, von der Seite.

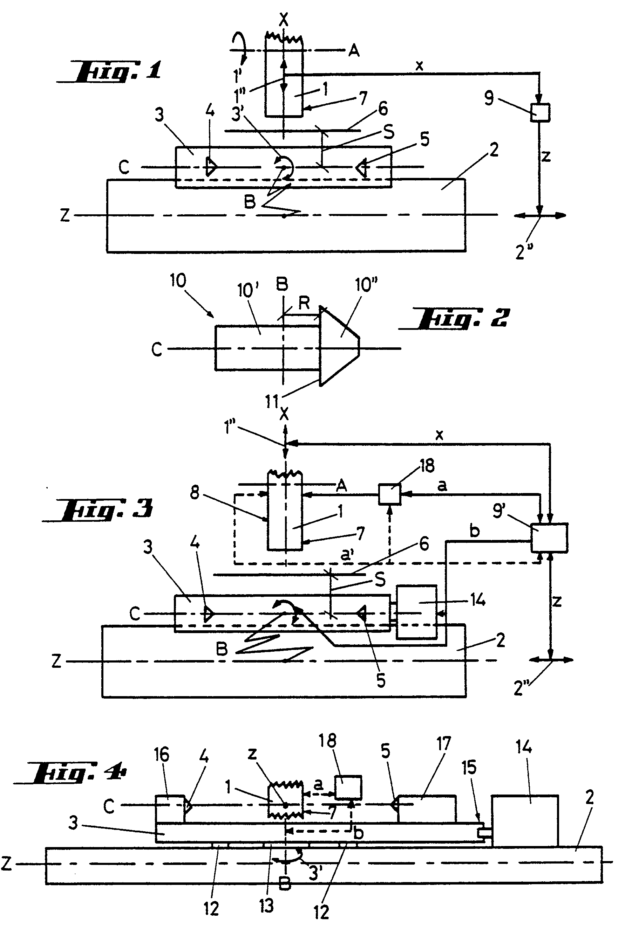

In Fig. 1 erkennt man die drei hier relevanten Teile der Maschine, die da sind: Schleifscheibe 1, Längsschlitten 2 und Drehtisch 3. Die Schleifscheibe 1 ist in Richtung des Pfeiles 1' drehbar um eine A-Achse gelagert. Die A-Achse ihrerseits ist in Richtung des Doppelpfeiles 1'' linear auf der X-Achse verschiebbar, derart, dass die Schleifscheibe 1 je nach Bedarf näher oder weiter an den Längsschlitten 2 herangefahren werden kann. Letzterer ist in Richtung des Doppelpfeiles 2' entlang seiner Längsachse, der sogenannten Z-Achse, linear verschiebbar. Der Längsschlitten 2 trägt den Drehtisch 3, welcher seinerseits eine Spitze 4 und eine Gegenspitze 5 trägt, zwischen welche das in Fig. 2 dargestellte Werkstück 10 zwecks Bearbeitung eingespannt wird. Die Längsachse des Drehtisches 3, die sogenannte C-Achse, ist identisch mit der Längsachse des zu schleifenden Werkstückes 10 und verläuft durch die Spitzen 4 und 5. Sie liegt, für das Schleifen des zylindrischen Teils 10' des Werkstückes 10, parallel zur und vorteilhafterweise senkrecht über der Z-Achse. Die hier gewählte versetzte Darstellung dient lediglich dazu, die einzelnen Teile und Achsen besser erkennen zu können. Der Schwenktisch 3 ist in Richtung des Doppelpfeiles 3' um eine zum Längsschlitten 2 senkrecht stehende Drehachse, die sogenannte B-Achse herum, drehbar auf letzterem gelagert. Weiter ist in dieser Figur eine fiktive Schleiflinie 6 dargestellt, entlang von welcher der Umfang der Schleifscheibe 1 während des Schleifvorganges mit dem Umfang des zu schleifenden Werkstückes zusammentrifft.

Der Fachmann weiss, dass für das Schleifen eines perfekten Zylinders 10' zwischen den Spitzen 4 und 5 beim sogenannten Einstechschleifen, bei dem weder das Werkstück noch die Schleifscheibe 1 parallel zu ihren Längsachsen A resp. C verschoben wird, die Schleiflinie 6, und somit die Umhüllende der Schleifscheibe 1, und die C-Achse absolut parallel zueinander stehen müssen.

Für das Zylindrischschleifen eines Werkstückes, das länger als die Schleifscheibe 1 breit ist, was nur möglich ist, wenn entweder wie üblich das Werkstück durch ein Hin- und herbewegen des Längsschlittens 2 entlang der Z-Achse, oder aber ein Hin- und herbewegen der Schleifscheibe 1 entlang von deren A-Achse realisiert wird, müssen entweder die beiden Achsen C und Z untereinander und bezüglich der Schleiflinie 6, oder aber die A-Achse bezüglich der Z-Achse absolut parallel verlaufen.

Auf bekannten Rund-Schleifmaschen und im Normalfall, also wenn das Werkstück durch Hin- und herbewegen des Längsschlittens 3 an der Schleifscheibe 1 vorbeigeführt wird, kann die Parallelität der C-Achse zur Z-Achse nur erreicht werden, indem ein Eich-Zylinder geschliffen wird, derart, dass der Schwenktisch 3 so lange manuell um seine Drehachse B herum gedreht wird, bis das geschliffene Werkstück effektiv zylindrisch und somit zum Eich-Zylinder geworden ist. Nur anhand eines so angefertigten Eich-Zylinders lässt sich die C-Achse korrekt einstellen und die Distanz S der Schleiflinie 6 zu dieser C-Achse ermitteln. Erst nach einer solchen Einstellung der Schleifmaschine lassen sich vorgegebene Zylinder und somit z.B. auch ein Werkstück 10 gemäss Fig. 2 schleifen. In letzterem Fall muss zusätzlich zur Parallalität zwischen C- und Z-Achse und Schleiflinie 6 sichergestellt sein, dass auch die Umhüllende der Schleifscheibe 1 parallel dazu ist. Ansonsten wird der zylindrische Teil 10' im an den konischen Teil 10'' anschliessenden Bereich nicht zylindrisch, sondern entsprechend der Neigung der Umhüllenden zur C-Achse konisch. Selbstverständlich richtet sich die Amplitude der Hin- und herbewegung des Längsschlittens 2 nach der Länge des konischen Teils 10', der Breite der Schleifscheibe 1 und der Lage der Konusreferenzfläche 11 bezüglich der rechten Scheibenkante 7 (Fig. 1).

Um anschliessend an das Schleifen des zylindrischen Teils 10' des Werkstückes 10 dessen konischen Teil 10'' schleifen zu können, muss die Schleifscheibe 1, resp. deren Drehachse A auf der X-Achse von der C-Achse und somit dem Werkstück 10 entfernt werden, worauf der Schwenktisch 3 manuell um seine Schwenkachse B herum entsprechend dem Winkelwert des Konus' verdreht wird. Daraufhin kann die Schleifscheibe 1 wieder an das Werkstück 10 herangefahren und die Hin- und herbewegung des Längsschlittens 2 wieder aufgenommen werden, solange, bis der konische Teil 10'' des Werkstückes 10 sein Sollmass erreicht hat. Dies kann nur anhand von regelmässigen Messungen festgestellt werden, wenn die relative Lage der Konusreferenzfläche 11 bezüglich der B-Achse nicht bestimmt ist.

Der Fachmann weiss aus Erfahrung, dass das Schleifen von Werkstücken der Form von jenem gemäss Fig. 2, oder ähnlichen in einer Aufspannung, in der Praxis selbst auf modernen CNC-Rund-Schleifmaschinen sehr aufwendig und langwierig und nur schwerlich in Serie möglich ist, da zu wenig Parameter definiert sind, um ein Bearbeitungsprogramm zu berechnen. Zudem bieten herkömmliche Rund-Schleifmaschinen nur CNC-gesteuerte Bewegungen bezüglich der X- und der Z-Achse an, wie dies in Fig. 1 anhand der Doppelpfeile x und z sowie dem Rechner 9 angedeutet ist.

Dies sieht völlig anders aus, wenn gemäss der Erfindung das Schleifverfahren zumindest derart modifiziert wird, dass nach dem vorerwähnten korrekten Einstellen der C-Achse mittels Eich-Zylinder die Drehlage der C-Achse bezüglich der B-Achse elektronisch für den Rechner der CNC-gesteuerten Rund-Schleifmaschine genullt wird, d.h., die für das Erreichen eines perfekten Zylinders notwendige Drehlage des Schwenktisches 3 um die Drehachse B herum im Radialkoordinatennetz mit Zentrum in der B-Achse als Winkel ''Null'' gesetzt wird. Ferner muss die relative Lage der Konusreferenzfläche 11 bezüglich der festen Spitze 4, resp. der Drehachse B, also deren Distanz R zur B-Achse, definiert werden. Dies kann beispielsweise dadurch erfolgen, dass vorteilhafterweise am Beginn des Schleifvorganges für den zylindrischen Teil 10' mit einem Körperschallgerät das Heranfahren der Schleifscheibenkante 7 an die Konusreferenzfläche 11 überwacht wird, wobei im Augenblick, wo die Schleifscheibenkante 7 die Konusreferenzfläche 11 berührt, die Z-Lage des Längsschlittens 2 festgehalten wird, woraus in Abhängigkeit der vorbekannten Breite der Schleifscheibe 1, deren X-Achse senkrecht zur B-Achse steht, der gewünschte Wert R berechnet werden kann. Die Kenntnis des Wertes R ist notwendig, um nach dem CNC-gesteuerten Verschwenken des Drehtisches 3 die Verschiebung der Schleifscheibe 1 auf der X-Achse zu steuern, d.h. deren X-Verschiebung zu berechnen, um den Konus-Sollwert zu erreichen. Dank dem Nullen der C-Achse und dem Bestimmen der Distanz R der Konusreferenzfläche 11 von der Drehachse B, hat der Rechner der Maschinensteuerung, selbstverständlich zusammen mit allen anderen in herkömmlicher Weise bestimmten Werte, alle notwendigen Daten, um das Bearbeitungsprogramm zu berechnen, derart, dass ein automatisches Schleifen einer ganzen Serie von ähnlichen Werkstückrohlingen möglich wird. Dabei kann das Nullen der C-Achse sowie das Bestimmen der Distanz R entweder für jedes Werkstück neu, oder anhand eines Eich-Werkstückes einmal für eine ganze Serie von Rohlingen erfolgen, sofern diese bereits präzise und gleichmässig genug sind. Gegebenenfalls kann auch nur einer der beiden Werte ''Null'' und R für jeden Rohling neu bestimmt werden, wogegen der andere als für eine Serie von Rohlingen unveränderlich angenommen wird.

Es ist selbstverständlich, dass für das Durchführen dieses Fertigungsverfahrens die CNC-Rund-Schleifmaschinen mit zusätzlichen Mitteln zu versehen sind. Erfindungsgemäss handelt es sich dabei im wesentlichen um eine ''Nullsetz''-Vorrichtung für die C-Achse und eine CNC-gesteuerte Schwenkvorrichtung für den Drehtisch 3.

In Fig. 3 ist eine entsprechend ausgerüstete CNC-Rund-Schleifmaschine schematisch dargestellt. Auch sie enthält eine Schleifscheibe 1, die auf der X-Achse und gegebenenfalls auf der A-Achse verschiebbar ist, einen auf der Z-Achse hin und her bewegbaren Längsschlitten 2, auf dem um die Drehachse B herum drehbar der Drehtisch 3 mit seiner festen Spitze 4 und der Gegenspitze 5, durch welche Spitzen die Werkstück-Längsachse C verläuft, montiert ist. Soweit entspricht diese Maschine einer herkömmlichen gemäss Fig. 1. Sie unterscheidet sich von jener aber dadurch, dass der Drehtisch 3 mittels einer Drehvorrichtung 14 rechnergesteuert in Richtung des Doppelpfeiles 3' um die B-Achse verschwenkbar ist, so dass die jeweilige Drehlage jederzeit mess- und feststellbar ist, wie dies mit dem Doppelpfeil b angedeutet ist. Zudem wird vorteilhafterweise zumindest die linke Schleifscheibenkante 7 mittels eines Messgerätes 18 und dem angepassten Rechner 9' bezüglich ihrer Distanz zur B-Achse, kontrolliert, wie dies mit dem Doppelpfeil a angedeutet ist, um die Distanz R bestimmen zu können, in welcher sich die besagte Konusreferenzfläche 11 von der B-Achse befindet. Es kann auch angezeigt sein, die zweite Schleifscheibenkante 8 entsprechend zu berücksichtigen, wie dies die unterbrochene Linie a' illustriert.

Der Fachmann erkennt, dass demnach eine herkömmliche CNC-Rund-Schleifmaschine einerseits mit einem Rechner 9' versehen werden muss, der mehr Parameter verarbeiten kann, als bei herkömmlichen Maschinen dieses Typs und die Mechanik zum Verdrehen des Drehtisches 3 CNC-kompatibel ausgeführt sein muss. Weiter muss die durch ein Messgerät, vorzugsweise ein Körperschallgerät, in einem beliebigen Zeitpunkt des Schleifvorganges ermittelte Lage von zumindest einer Schleifscheibenkante relativ zur B-Achse, in den Rechner 9' einlesbar sein.

Konstruktiv lassen sich diese Modifikationen auf unterschiedliche Arten realisieren. Einerseits durch einen CNC-gesteuerten Motor, der ein Schneckengetriebe antreibt, das auf ein Zahnsegment des Drehtisches 3 wirkt, wobei die Messung der Drehposition des letzteren durch einen Encoder oder Rotationsgeber, der auf dem Motor oder der Schnecke sitzt, geschieht. Alternativ kann auch ein Glasmassstab, der auf dem Längsschlitten 2 montiert ist und die lineare Verschiebung eines Messpunktes auf dem Drehtisch 3 misst, für die Messung der Drehlage des Drehtisches 3 verwendet werden. Weiter eignet sich die Verwendung eines Encoders auch direkt an der Drehachse des Drehtisches 3. Um eine möglichst hohe Messpräzision zu erreichen, muss darauf geachtet werden, dass der Drehtisch 3 immer in derselben Drehrichtung an die Messung herangefahren wird, gegebenenfalls durch ein vorgängiges Ueberfahren des Messpunktes.

Für den Antrieb des Schneckengetriebes eignen sich sowohl Gleichstrom- als auch Schrittmotoren. Bei Verwendung eines letzteren direkt auf der Drehtischachse kann ein Schneckengetriebe sogar überflüssig sein.

In einer weiter verbesserten CNC-Rund-Schleifmaschine kann das Schleifen eines Eich-Zylinders umgangen werden, wenn zusätzliche Messgeräte für das zweifelsfreie Bestimmen der Zylindrizität und dem Durchmesser des zylindrischen Teiles 10' und zumindest einer Schleifscheibenkante 7 oder 8 bezüglich der B-Achse installiert werden.

Als Messgeräte eignen sich dazu Körperschallgeräte, berührungslose Endschalter, Laserstrahlen, Fotozellen, Durchmessermessgeräte, Längspositioniergeräte, etc.

Um eine zufriedenstellende Funktion des CNC-gesteuerten Drehtisches 3 zu erreichen, muss dessen Lagerung und Festklemm- resp. Lösemechanismus auf dem Längsschlitten 2 vorteilhafterweise ebenfalls CNC-kompatibel sein. Fig. 4 zeigt eine vorteilhafte Lösungsvariante und eine Steuerung, die sämtliche Anforderungen erfüllen. Es ist dabei zu beachten, dass dem Fachmann selbstverständliche konstruktive Details in dieser Figur aus Uebersichtlichkeitsgründen weggelassen sind.

Die in etwas grösserem Massstab gehaltene Fig. 4 zeigt den Längsschlitten 2 mit dem drehbar darauf montierten Drehtisch 3 von der Seite. Letzterer ist vorteilhafterweise mittels eines Lagerringes 12 spielfrei auf dem Längsschlitten 2 montiert. Um ihn während der Bearbeitung des Werkstückes 10 fest und unbeweglich mit dem ihn tragenden Längsschlitten 2 zu verbinden, ist zwischen letzterem und dem Drehtisch 3 eine CNC-gesteuerte hydraulische Klemmvorrichtung 13 angebracht. Um den Drehtisch 3 mit möglichst kleinem Kraftaufwand drehen zu können, wird die Klemmvorrichtung 13 gelöst und der Drehtisch 3 vorteilhafterweise auf ein Luftkissen gelegt. Mittels einer CNC-gesteuerten Dreh- und Drehwinkelmessvorrichtung 14, die wie hiervor beschrieben konstruiert sein kann, wird der Drehtisch 3, resp. die C-Achse, z.B. über ein Getriebe 15 in die vorbestimmte Drehlage gebracht. Das sich zwischen den Spitzen 3 und 4 befindliche Werkstück wird dadurch gegenüber der Schleiflinie 6 verdreht, sodass ihm ein Konus angeschliffen werden kann. Wie üblich, sind die Spitzen 3 und 4 Teile eines Reitstockes 16 resp. eines Spindelstokkes 17, die beide längsverschiebbar mit dem Drehtisch 3 verbunden sind.

Ein Messgerät 18, bei dem es sich wie oben beschrieben beispielsweise um ein Körperschallgerät handeln kann, ist mit dem Längsschlitten 2 verbunden. Es dient der Ermittlung der Distanz der Schleifscheibenkante 7 zur B-Achse in dem Zeitpunkt des Schleifvorganges, in dem sie mit der Konusreferenzfläche 11 in Berührung kommt. Damit wird die Distanz R der Konusreferenzfläche 11 zur B-Achse ermittelt. Sie definiert in einem späteren Zeitpunkt des Schleifvorganges den X-Vorschub der Schleifscheibe 1, zwecks Erlangung des vorbestimmten Konus 10''.

Dem qualifizierten Werkzeugmaschinenbauer braucht man die konstruktiven Details der verschiedenen Komponenten des erfindungsgemässen Mittels zur Durchführung des erfinderischen Verfahrens nicht zu erläutern. Er kennt sie aus seiner Praxis und bedarf keiner erfinderischen Tätigkeit, um sie in der erfindungsgemässen Art und Weise korrekt einzusetzen.

**Patentansprüche**

1. Verfahren zum Nullstellen einer Rund-Schleifmaschine mit zumindest einer auf der X-Achse verschiebbaren Schleifscheibe (1), einem auf der Z-Achse verschiebbaren Längsschlitten (2) mit darauf um die B-Achse drehbarem Drehtisch (3), der für die Aufnahme eines zu schleifenden Werkstückes (10) zwischen zwei Spitzen (4, 5) ausgelegt ist, und einem NC-Rechner (9), bei welchem Verfahren ein Werkstück (10) unter Verdrehung des Drehtisches (3) entlang einer Schleiflinie (6) so lange geschliffen wird, bis die Längsachse (C-Achse) des Werkstückes (10) parallel zur Längsachse (Z-Achse) des Längsschlittens (2) liegt, derart, dass ein vorbestimmten Anforderungen genügender Eich-Zylinder erhalten wird, dadurch gekennzeichnet, dass die so definierte Drehlage der C-Achse bezüglich der B-Achse elektronisch Null gesetzt und dem Rechner (9') eingegeben wird, und dass aufgrund der X-Position der Schleifscheibe (1) und dem Durchmesser des Eich-Zylinders die Lage der Schleiflinie (6) bezüglich den A- und C-Achsen berechnet und dem Rechner (9') eingegeben wird.

2. Verfahren nach Anspruch 1 für das Schleifen von zylindrische und konische Teile (10', 10'') aufweisenden Werkstücken (10), dadurch gekennzeichnet, dass aufgrund der bekannten Dicke der Schleifscheibe (1) in dem Zeitpunkt des Schleifvorganges, in dem eine Schleifscheibenkante (7) eine Referenzfläche (11) des konischen Teils (10'') berührt, die Distanz (R) der Konusreferenzfläche (11) zur B-Achse ermittelt und dem Rechner (9') eingegeben wird.

3. Verfahren nach Anspruch 2, dadurch gekennzeichnet, dass die Werte der Distanz (S) der Schleiflinie (6) zur C-Achse und der Distanz (R) der Konusreferenzfläche (11) zur B-Achse im Rechner in die Berechnung des Schleifprogramms für das zu schleifende Werkstück (10) mit einbezogen werden.

4. Verfahren nach Anspruch 3, dadurch gekennzeichnet, dass die beiden besagten Distanzen (S, R) für zumindest ein Werkstück (10) einer Serie ermittelt werden, worauf sie für alle Werkstücke (10) dieser Serie unverändert übernommen werden.

5. Verfahren nach Anspruch 3, dadurch gekennzeichnet, dass die besagten Distanzen (S, R) für jedes Werkstück (10) individuell ermittelt werden.

6. Mittel zur Durchführung des Verfahrens nach Anspruch 1 in Form einer Rund-Schleifmaschine mit zumindest einer auf der X-Achse verschiebbaren Schleifscheibe (1), einem auf der Z-Achse verschiebbaren Längsschlitten (2) mit darauf um die B-Achse drehbarem Drehtisch (3), der für die Aufnahme eines zu schleifenden Werkstückes (10) zwischen Spitzen (4, 5) ausgelegt ist, und einem NC-Rechner (9), dadurch gekennzeichnet, dass auf dem Längsschlitten (2) eine NC-steuerbare Drehvorrichtung (14) für den Drehtisch (3) vorhanden ist, die mit einem mit dem Rechner verbundenen Messgerät zur Bestimmung der Drehwinkellage und einer Nullsetzvorrichtung verbunden ist.

7. Mittel nach Anspruch 6, dadurch gekennzeichnet, dass auf dem Längsschlitten (2) ein Messgerät (18) zur Bestimmung der Distanz (R) einer Konusreferenzfläche (11) bezüglich der B-Achse montiert ist.

8. Mittel nach Anspruch 6, dadurch gekennzeichnet, dass die Drehvorrichtung (14) einen Motor und ein Schneckengetriebe sowie ein Drehlagemessgerät umfasst und mit dem Rechner (9') verbunden ist und auf ein Zahnsegment des Drehtisches (3) wirkt.

9. Mittel nach Anspruch 6, dadurch gekennzeichnet, dass die Drehvorrichtung (14) ein Schrittmotor ist, der direkt auf die Drehachse des Drehtisches (3) wirkt.

10. Mittel nach Anspruch 6, dadurch gekennzeichnet, dass das Drehlagemessgerät entweder ein Encoder oder ein Glasmassstab ist, der die lineare Verschiebung eines Messpunktes auf dem Drehtisch (3) bezüglich der Z-Achse misst.

11. Mittel nach Anspruch 8, dadurch gekennzeichnet, dass der Motor ein Gleichstrom- oder ein Schrittmotor ist.

**Revendications**

1. Procédé pour effectuer la mise à zéro d'une rectifieuse cylindrique comportant au moins une meule de rectification (1) mobile suivant un axe X, et un chariot longitudinal (2) mobile suivant un axe Z, ce chariot (2) portant un plateau tournant (3) qui peut pivoter autour d'un axe B et qui est agencé pour recevoir une pièce à rectifier (10) montée entre deux pointes (4, 5), un calculateur numérique de commande (9) étant prévu pour assurer le fonctionnement de la rectifieuse, le procédé consistant à opérer sur la pièce à traiter (10) le long d'une ligne de rectification (6), après avoir fait pivoter le plateau tournant (3) d'un angle tel que l'axe longitudinal C de la pièce à traiter (10) soit parallèle à l'axe longitudinal Z du chariot longitudinal (2), de manière à obtenir un cylindre d'étalonnage répondant à des conditions imposées, caractérisé en ce qu'on opère électroniquement pour assurer la mise à zéro, suivant la position angulaire ainsi définie de l'axe C autour de l'axe B, et pour introduire cette indication dans le calculateur (9'), et aussi pour calculer la position de la ligne de rectification (6) par rapport aux axes A et C, en fonction de la position X de la meule de rectification (1) et du diamètre du cylindre d'étalonnage, avant d'introduire cette position dans le calculateur (9').

2. Procédé selon la revendication 1, pour rectifier des pièces (10) comportant des parties cylindriques et coniques (10', 10''), caractérisé en ce que, compte tenu de l'épaisseur de la meule de rectification (1), on détermine la valeur de la distance (R) de la face de référence (11) d'une partie conique (10'') par rapport à l'axe B, valeur considérée au moment où la face antérieure (7) de la meule de rectification vient au contact de la face de référence (11) précitée, et en ce qu'on introduit cette valeur de la distance (R) dans le calculateur (9').

3. Procédé selon la revendication 2, caractérisé en ce qu'on prend en compte dans le calculateur les valeurs de la distance (S) de la ligne de rectification (6) par rapport à l'axe C, et de la distance (R) de la face de référence (11) du cône par rapport à l'axe B, pour l'élaboration du programme d'usinage de la pièce à rectifier (10).

4. Procédé selon la revendication 3, caractérisé en ce qu'on détermine les valeurs des deux distances précitées (S, R) pour au moins une pièce (10) d'une série à usiner, et ne ce qu'on utilise ensuite ces valeurs sans modification pour toutes les pièces (10) de la même série.

5. Procédé selon la revendication 3, caractérisé en ce qu'on détermine à chaque fois les valeurs des deux distances en question (S, R) pour chaque pièce à usiner (10).

6. Dispositif pour mettre en oeuvre le procédé selon la revendication 1 sur une rectifieuse comportant au moins une meule de rectification (1) mobile suivant un axe X, et un chariot longitudinal (2) mobile suivant un axe Z, ce chariot portant un plateau tournant (3) qui peut pivoter autour d'un axe B et qui est adapté à recevoir une pièce à rectifier (10) montée entre deux pointes (4, 5); la machine comportant en outre un système de commande à calculateur numérique, caractérisé en ce que le chariot longitudinal (2) est pourvu d'un système de manoeuvre en rotation (14) asservi au calculateur numérique de commande pour faire pivoter le plateau tournant (3), ce système de manoeuvre (14) étant associé à un organe de mesure relié au calculateur numérique de commande pour déterminer la position angulaire et associé en outre à un système de mise à zéro.

7. Dispositif selon la revendication 6, caractérisé en ce qu'il comporte un organe de mesure (18) monté sur le chariot longitudinal (2) pour déterminer la valeur de la distance (R) d'une face de référence (11) d'un cône par rapport à l'axe B.

8. Dispositif selon la revendication 6, caractérisé en ce que le système de manoeuvre en rotation (14) comporte un moteur et un mécanisme d'entraînement à vis sans fin, ainsi qu'un organe de mesure de la position angulaire du plateau tournant (3), cet ensemble étant relié au calculateur (9') du système de commande de la machine et servant à attaquer un secteur denté du plateau tournant (3).

9. Dispositif selon la revendication 6, caractérisé en ce que le système de manoeuvre en rotation (14) est constitué par un moteur pas-à-pas qui attaque directement l'axe de pivotement du plateau tournant (3).

10. Dispositif selon la revendication 6, caractérisé en ce que l'organe de mesure de la position angulaire du plateau tournant est constitué par un codeur ou par une échelle de mesure en verre qui sert à mesurer le déplacement linéaire d'un point de mesure du plateau tournant (3) par rapport à l'axe Z.

11. Dispositif selon la revendication 8, caractérisé en ce que le moteur est un moteur à courant continu ou un moteur pas-à-pas.

**Claims**

1. A process for resetting a circular grinding machine having at least one grinding wheel (1) displaceable on the X axis, a longitudinal slide (2) displaceable on the Y axis and having a rotary table (3) which can rotate thereon around the B axis and which is designed to receive a workpiece (10) to be ground between two points (4, 5) and an NC computer (9), and in said process a workpiece (10) is ground along a grinding line (6) while the rotary table (3) rotates until the longitudinal axis (C axis) of the workpiece (10) is parallel to the longitudinal axis (Z axis) of the longitudinal slide (2), so that a calibration cylinder which meets predetermined requirements is obtained, characterised in that the rotational position of the C axis with respect to the B axis defined in this way is electronically set at zero and is input in the computer (9') and in that the position of the grinding line (6) with respect to the A—C axes is calculated and input into the computer (9') on the basis of the X position of the grinding wheel (1) and the diameter of the calibration cylinder.

2. A process according to Claim 1 for grinding workpieces (10) having cylindrical and conical parts (10', 10''), characterised in that the distance (R) of the cone reference surface (11) from the B axis is determined and input into the computer (9') on the basis of the known thickness of the grinding wheel (1) at the moment during the grinding operation when a grinding wheel edge (7) touches a reference surface (11) of the conical part (10'').

3. A process according to Claim 2, characterised in that the values for the distance (S) of the grinding line (6) from the C axis and the distance (R) of the cone reference surface (11) from the B axis in the computer are included in the calculation of the grinding program for the workpiece (10) to be ground.

4. A process according to Claim 3, characterised in that the two said distances (S, R) are determined for at least one workpiece (10) in a series, whereupon they can be adopted without modification for all workpieces (10) in this series.

5. A process according to Claim 3, characterised in that the said distances (S, R) are determined individually for each workpiece (10).

6. Means for performing the process according to Claim 1, in the form of a circular grinding machine having at least one grinding wheel (1) displaceable on the X axis, a longitudinal slide (2) displaceable on the Z axis having a rotary table (3) which rotates thereon around the B axis and which is designed to receive a workpiece (10) to be ground between points (4, 5), and an NC computer (9), characterised in that on the longitudinal slide (2) there is an NC controllable turning mechanism (14) for the rotary table (3), which is connected to a measuring device connected to the computer for determining the position of the angle of rotation and a zero-setting device.

7. Means according to Claim 6, characterised in that a measuring device (18) for determining the distance (R) of a cone reference surface (11) with respect to the B axis is mounted on the longitudinal slide (2).

8. Means according to Claim 6, characterised in that the turning mechanism (14) comprises a motor and a worm gear and also a device measuring the rotational position and is connected to the computer (9') and acts on a tooth sector of rotary table (3).

9. Means according to Claim 6, characterised in that the turning mechanism (14) is a stepping motor which acts directly on the axis of rotation of the rotary table (3).

10. Means according to Claim 6, characterised in that the device for measuring the rotational position is either an encoder or a glass scale which measures the linear displacement of a measurement point on the rotary table (3) with respect to the Z axis.

11. Means according to Claim 8, characterised in that the motor is a direct-current or a stepping motor.

EP 0 252 090 B1

Fig. 1

Fig. 2

Fig. 3

Fig. 4